# EUROPEAN PATENT APPLICATION

(11) **EP 2 040 442 A1**
(43) Date of publication of application: **25.03.2009**
(21) Application number: 08162272.2
(22) Date of filing: 12.08.2008
(51) Int. Cl.: H04M 1/02

(54) **Portable device having a semi-automatic sliding cover mechanism**

(30) Priority: 20.09.2007 CN 200710154663
(71) Applicant: ASUSTeK Computer Inc., Peitou, Taipei 112 (TW)
(72) Inventor: Chen, Yi-An, 112, Peitou, Taipei (TW)
(74) Representative: 2K Patentanwälte Blasberg Kewitz & Reichel

(57) **Abstract**

There is disclosed a sliding cover structure including a first sliding member (211) having a first arc sliding track (221a), a second sliding member (221) disposed opposite to the first sliding member and a first roller assembly (23) having a first elastic element (232) and a first roller set (231). At least one end of the first elastic element is fixed to the second sliding member. The first roller set is fixed to the first elastic element and slides along the first arc sliding track. When the first sliding member (211) is forced to slide relatively to the second sliding member (221), the first roller set slides along the first arc sliding track and the first elastic element deforms to accumulate an elastic potential energy. After the first roller set (23) passes the top of the first arc sliding track, the elastic potential energy is released to make the first sliding member slide along the first arc sliding track automatically.

## Description

### BACKGROUND OF THE INVENTION

### FIELD OF INVENTION

The invention relates to an electronic device and a sliding cover structure thereof.

### RELATED ART

According to the progressive of technology, many new and useful electronic devices are discloses. For example, since the communication technology has been developed, the mobile phone is now becoming one of the indispensable electronic devices.

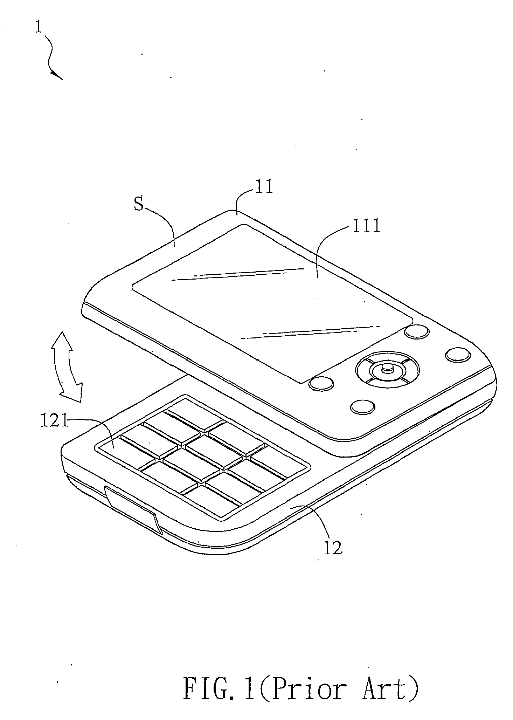

As shown in FIG. 1, a conventional mobile phone 1 includes an upper housing 11 and a lower housing 12, which are connected by a hinge (not shown). A display area 111, which exposes a display panel, is disposed on the top surface S of the upper housing 11. The lower housing 12 has a bottom area 121.

As mentioned above, when a user wants to use the mobile phone 1, he or she must apply a force to the upper housing 11, so that the hinge can rotate the upper housing 11 with relative to the lower housing 12. Thus, the mobile phone 1 can be opened to expose the bottom area 121 for operation. For example, the user can dial the bottom area 121 to make a phone call or operate the bottom area 121 according to the information displayed on the display area 111.

However, in the prior art, the user has to continuously apply a force to the upper housing 11 until pushing the upper housing 11 to the open position. This may cause the inconveniency and trouble of the user.

### SUMMARY OF THE INVENTION

An object of the invention is to provide an electronic device with a sliding cover structure, which can be opened or closed semi-automatically.

To achieve the above object, the invention discloses a sliding cover structure including a first sliding member, a second sliding member and a first roller assembly. The first sliding member has a first arc sliding track. The second sliding member is disposed opposite to the first sliding member. The first roller assembly includes a first elastic element and a first roller set. At least one end of the first elastic element is fixed to the second sliding member, and the first roller set is fixed to the first elastic element and slides along the first arc sliding track. When the first sliding member is forced to slide relatively to the second sliding member, the first roller set slides along the first arc sliding track and the first elastic element deforms to accumulate an elastic potential energy. After the first roller set passes the top of the first arc sliding track, the elastic potential energy is released to make the first sliding member slide along the first arc sliding track automatically.

In addition, the invention also discloses an electronic device including a first housing, a second housing and a first roller assembly. The first housing includes a first sliding member, which has a first arc sliding track. The second housing is slidingly connected to the first housing and includes a second sliding member. The first roller assembly includes a first elastic element and a first roller set. At least one end of the first elastic element is fixed to the second sliding member, and the first roller set is fixed to the first elastic element and slides along the first arc sliding track. When the first housing is forced so the first sliding member is slid relatively to the second sliding member, the first roller set slides along the first arc sliding track and the first elastic element deforms to accumulate an elastic potential energy. After the first roller set passes the top of the first arc sliding track, the elastic potential energy is released to make the first sliding member slide along the first arc sliding track automatically.

As mentioned above, the electronic device and sliding cover structure thereof of the invention utilize the cooperation of the arc sliding track of the first sliding member and the roller set of the second sliding member, so that the roller set, which is fixed on the elastic element, can slide on the arc sliding track so as to generate the relative movement of the first and second sliding members. Thus, when the user does not need to use the bottom area of the second sliding member, the bottom area can be covered and protected by the first sliding member. When the user wants to use the bottom area, the first and second sliding members can relatively move to expose the bottom area. Thus, the user can operate the bottom area. In addition, since the first arc sliding track has an arc shape, the semi-automatic sliding function can be performed according to the relative movement of the first and second sliding members. This can increase the convenience of the user. Furthermore, the connection interface of the first and second sliding members can be efficiently minimized by the combination usage of the first arc sliding track and the first roller set, thereby decreasing the thickness of the electronic device.

### BRIEF DESCRIPTION OF THE DRAWINGS

The invention will become more fully understood from the detailed description and accompanying drawings, which are given for illustration only, and thus are not limitative of the present invention, and wherein:

FIG. 1 is a schematic diagram showing a conventional mobile phone;

FIG. 2 is a schematic diagram of an electronic device according to a first preferred embodiment of the invention;

FIG. 3A is a top view of a first sliding member and a second sliding member of the electronic device of FIG. 2;

FIG. 3B is an enlarged sectional view of the first sliding member and the second sliding member along the line AA of FIG. 3A;

FIGS. 4A to 4C are top views showing the movement of the first sliding member and the second sliding member of the electronic device of FIG. 2;

FIG. 5A is a top view of an electronic device according to a second preferred embodiment of the invention;

FIG. 5B is an enlarged sectional view of a first sliding member and a second sliding member along the line BB of FIG. 5A;

FIG. 6A is a top view of an electronic device according to a third preferred embodiment of the invention;

FIG. 6B is an enlarged sectional view of a first sliding member and a second sliding member along the line CC of FIG. 6A;

FIG. 7A is a top view of an electronic device according to a fourth preferred embodiment of the invention; and

FIG. 7B is an enlarged sectional view of a first sliding member and a second sliding member along the line DD of FIG. 7A.

### DETAILED DESCRIPTION OF THE INVENTION

The present invention will be apparent from the following detailed description, which proceeds with reference to the accompanying drawings, wherein the same references relate to the same elements.

### FIRST EMBODIMENT

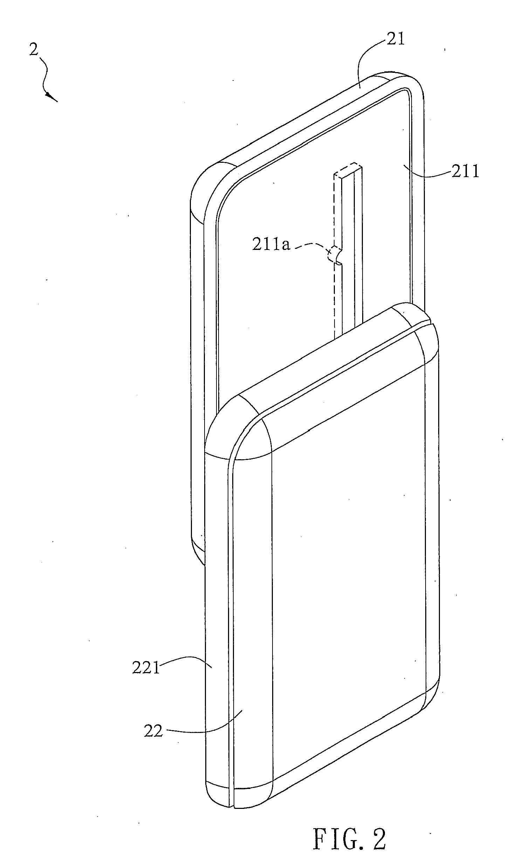

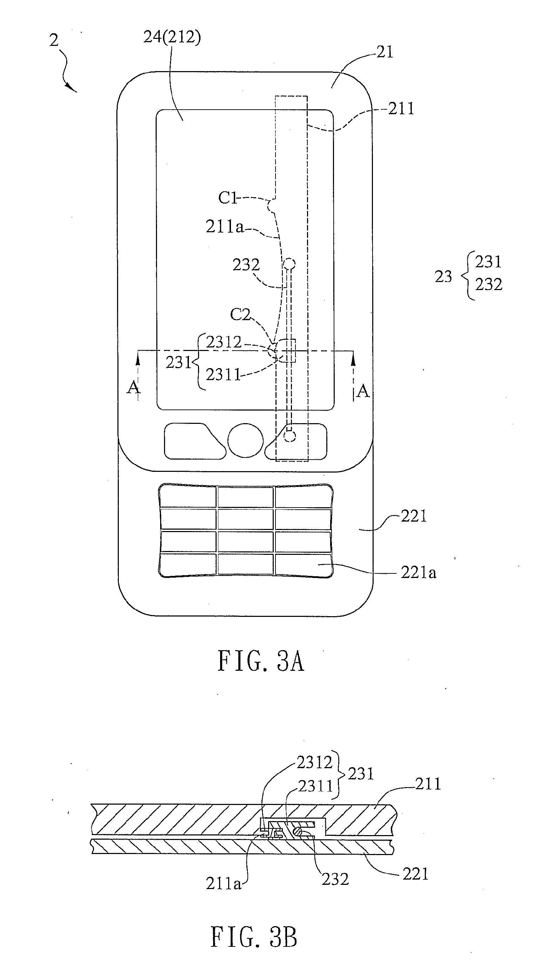

Please refer to FIGS. 2, 3A and 3B. FIG. 2 is a schematic diagram of an electronic device 2 according to a first preferred embodiment of the invention. FIG. 3A is a top view of a first sliding member 211 and a second sliding member 221 of the electronic device 2 of FIG. 2. FIG. 3B is an enlarged sectional view of the first sliding member 211 and the second sliding member 221 along the line AA of FIG. 3A.

The electronic device 2 includes a first housing 21, a second housing 22 and a first sliding assembly 23. In the embodiment, the electronic device 2 is, for example, a mobile phone. Of course, the electronic device 2 can be any electronic device with a sliding cover structure such as a PDA (personal digital assistant), a mini computer or a digital media player.

The first housing 21 has a first sliding member 211 and an opening 212. The first sliding member 211 has a first arc sliding track 211a disposed opposite to the second sliding member 221. In the embodiment, the first sliding member 211 is, for example, a circular arc and has a first recess C1 and a second recess C2. A display panel 24 is disposed in the opening 212 and is accommodated between the first sliding member 211 and the first housing 21.

The second housing 22 is slidingly connected to the first housing 21 and has a second sliding member 221 disposed opposite to the first sliding member 211. In the embodiment, the second sliding member 221 has a bottom area 221a, and the user can dial the bottoms in the bottom area 221a to make a phone call or send a message.

The first roller assembly 23 includes a first roller set 231 and a first elastic element 232. The first elastic element 232 can be a spring or a wire spring. The first elastic element 232 is disposed adjacent to the first arc sliding track 211a, and the extension direction of the first elastic element 232 is the track direction of the first arc sliding track 211a. In the embodiment, the first elastic element 232 is a wire spring. At least one end of the first elastic element 232 is fixed to the second sliding member 221. In the embodiment, two ends of the first elastic element 232 are fixed to the second sliding member 221, for example. In addition, the first roller set 231 has a first fixing portion 2311 and a first roller 2312. The center of the first roller 2312 and the center of the first arc sliding track 211a, which is a circular arc, are disposed at different sides of the first arc sliding track 211a. The first fixing portion 2311 is fixed on the first elastic element 232. The first roller 2312 is slidingly disposed on the first arc sliding track 211a, and is capable of sliding between the first recess C1 and the second recess C2.

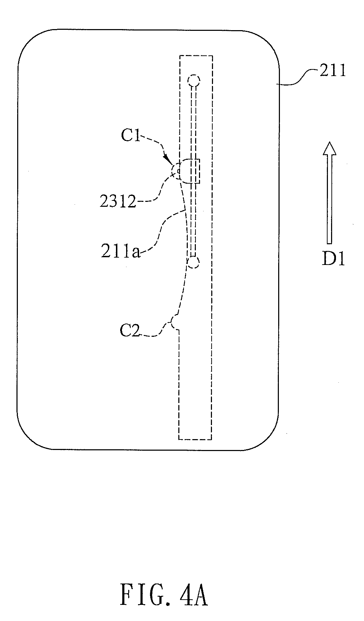

FIGS. 4A to 4C are top views showing the movement of the first sliding member 211 relative to the second sliding member 221 of the electronic device 2 of FIG. 2. To be noted, the movements of the first housing 21 and the second housing 22 are depending on the first sliding member 211 and the second sliding member 221, respectively, so the following illustrations will focus on the first sliding member 211 and the second sliding member 221 only.

With reference to FIG. 4A, the electronic device 2 is initially closed. That is, the first sliding member 211 completely covers the bottom area of the second sliding member (not shown). The first sliding assembly 23, which is shown by dotted lines, is disposed between the first sliding member 211 and the second sliding member 221. When a user wants to use the bottom area, he or she must apply a force on the first sliding member 211 along a first direction D1 (opening direction). Thus, the first roller 2312, which is disposed on the second sliding member 221, can be slid out of the first recess C1 of the first arc sliding track 211a. Then, the first sliding member 211 is moved toward the first direction D1. In this case, the first roller assembly 23 is fixed, and the first sliding member 211 is moved relative to the second sliding member and the first roller assembly 23.

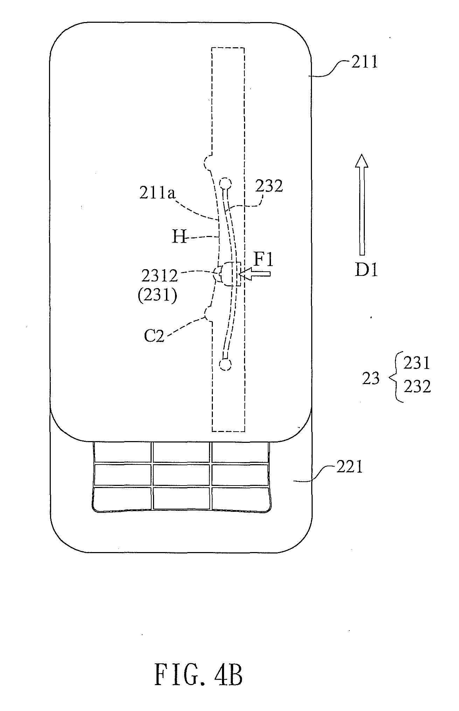

Referring to FIG. 4B, after the first sliding member 211 moves toward the first direction D1, the first elastic element 232 of the first roller assembly 23 deforms to accumulate an elastic potential energy. At the same time, a recovery force F1, which is perpendicular to the first direction D1, is applied to the first roller set 231, so that the first roller 2312 can be close to the first arc sliding track 211a and slide along the first arc sliding track 211a.

Then, the user continuously applies the force to the first sliding member 211. When the first roller 2312 slides over the top H of the first arc sliding track 211a, the slope of the first arc sliding track 211a, regarding to the first roller 2312, is transformed from upwards to downwards. After the first roller 2312 passes the top H of the first arc sliding track 211a, the first elastic element 232 can release its elastic potential energy to make the first roller 2312 slide along the first arc sliding track 211a automatically. Thus, the user does not have to apply force continuously, and the roller 2312 can automatically slide to the second recess C2. After that, the first sliding member 211 can be moved to an opening position and then fixed.

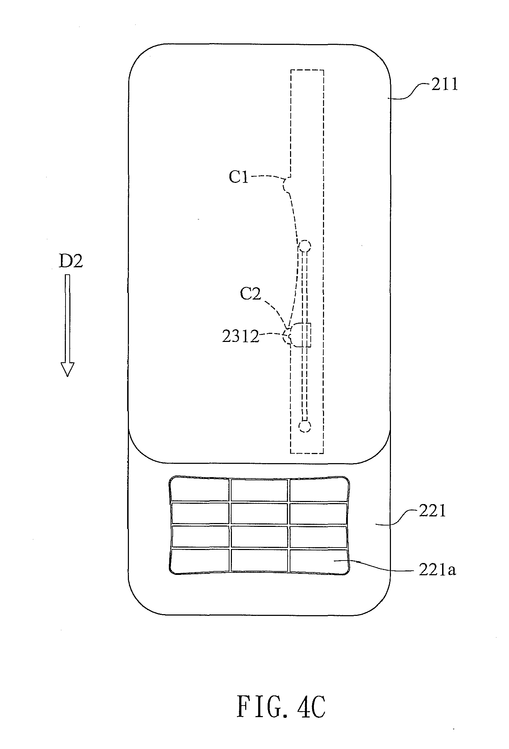

As shown in FIG. 4C, when the first roller 2312 is fixed at the second recess C2, the bottom area 221a of the second sliding member 221 can be exposed for the user to use it.

In the contrary, when the user does not want to use the bottom area 221a, he or she can simply apply a force to the first sliding member 211 toward a second direction (closing direction). Thus, the first roller 2312, which is disposed on the second sliding member 221, can be slid out of the second recess C2 of the first arc sliding track 211a, and move toward the second direction D2.

Then, the first roller 2312 can move toward the second direction D2 and be fixed at the first recess C1 according to the above-mentioned manner. Thus, the first sliding member 211 can completely cover the bottom area 221a of the second sliding member 221, so that the electronic device 2 returns to the closing status as shown in FIG. 4A.

As shown in FIGS. 4A to 4C, the first sliding member 211 and the second sliding member 221 can have relative movement according to the cooperation of the first arc sliding track 211a and the first roller set 231. In the embodiment, if the user does not need the bottom area 221a, the bottom area 221a can be covered by the first sliding member 211. Alternatively, if the user needs the bottom area 221a, the bottom area 221a can be exposed for operations by pushing the first sliding member 211 to generate the relative movement of the first sliding member 211 and the second sliding member 221. Moreover, since the first arc sliding track 211a has an arc shape, the semi-automatic sliding function can be performed according to the relative movement of the first sliding member 211 and the second sliding member 221. This can increase the convenience of the user. Furthermore, the connection interface of the first sliding member 211 and the second sliding member 221 can be efficiently minimized by the combination usage of the first arc sliding track 211a and the first roller set 231, thereby decreasing the thickness of the electronic device 2.

### SECOND EMBODIMENT

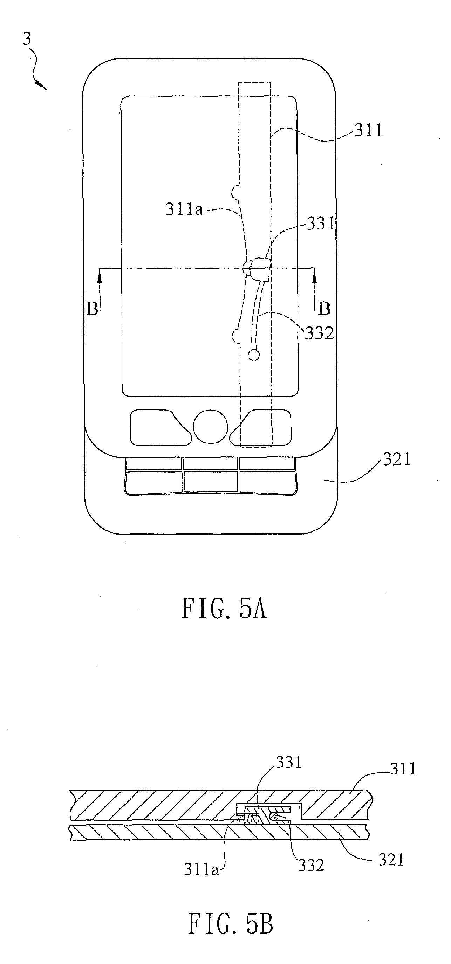

Please refer to FIGS. 5A and 5B. FIG. 5A is a top view of an electronic device 3. FIG. 5B is an enlarged sectional view of the first sliding member 311 and the second sliding member 321 along the line BB of FIG. 5A.

The difference between the electronic device 3 and the electronic device 2 of the first embodiment is in that only one end of the first elastic element 332 is fixed to the second sliding member 321. Thus, when the first sliding member 311 moves relative to the second sliding member 321, the first roller set 331 can slide along the first arc sliding track 311a. Then, the first elastic element 332 deforms to accumulate an elastic potential energy, thereby make the first roller set 331 close to the first arc sliding track 311a.

Since only one end of the first elastic element 332 is fixed, the length of the first elastic element 332 can be shortened. Thus, the manufacturing efficiency of the electronic device 3 can be increased, and the cost thereof can be decreased.

### THIRD EMBODIMENT

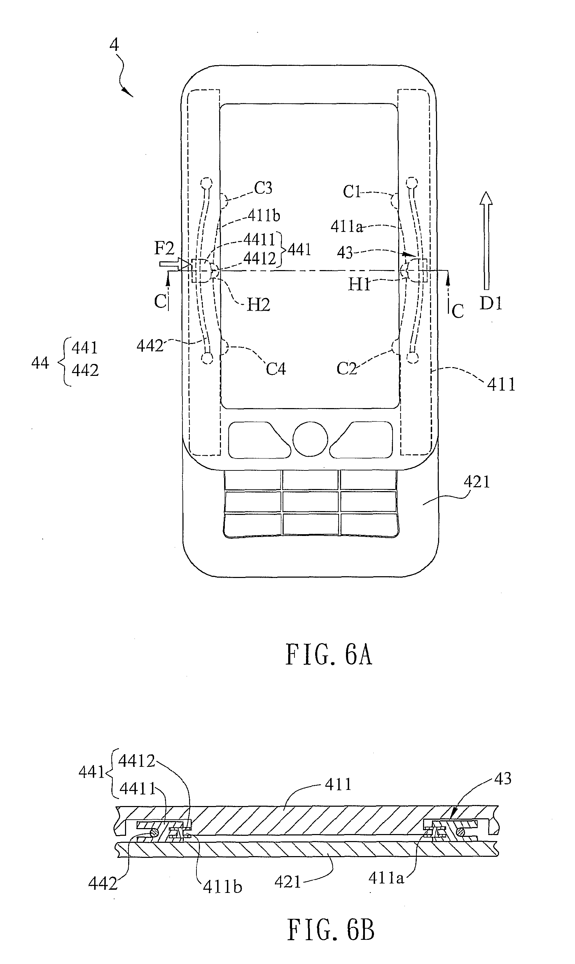

Please refer to FIGS. 6A and 6B. FIG. 6A is a top view of an electronic device 4. FIG. 6B is an enlarged sectional view of the first sliding member 411 and the second sliding member 421 along the line CC of FIG. 6A.

The difference between the electronic device 4 and the electronic device 2 of the first embodiment is in that the electronic device 4 further includes a second roller assembly 44, which has a second roller set 441 and a second elastic element 442. At least one end of the second elastic element 442 is fixed to the second sliding member 421. In the embodiment, two ends of the second elastic element 442 are, for example but not limited to, fixed to the second sliding member 421. The first sliding member 411 further includes a second arc sliding track 411b. The second sliding set 441 is fixed to the second elastic element 442 and is slid on the second arc sliding track 411b. Herein, the first arc sliding track 411a and the second arc sliding track 411b are disposed between the first roller assembly 43 and the second roller assembly 44.

The second arc sliding track 411b is also a circular arc, and the top H2 of the second arc sliding track 411b is corresponding to the top H1 of the first arc sliding track 411a. The second arc sliding track 411b has a third recess C3 and a fourth recess C4, which are disposed corresponding to the first recess C1 and the second recess C2, respectively.

The second roller assembly 44 is disposed corresponding to the first roller assembly 43. The second roller set 441 has a second fixing portion 4411 and a second roller 4412. The second fixing portion 4411 is fixed to the second elastic element 442, and the second roller 4412 is slidingly disposed on the second arc sliding track 411b. The center of the second roller set 441 and the center of the second arc sliding track 411b are disposed at different sides of the second arc sliding track 411b. The second elastic element 442 can be, for example, a spring or a wire spring.

Thus, when the first sliding member 411 and the second sliding member 421 are operated according to the first arc sliding track 411a and the first roller assembly 43 as the first embodiment, the second arc sliding track 411b and the second roller assembly 44 can have the relative movement similar to the first embodiment. That is, after the first sliding member 411 moves toward the first direction D1, the second roller 4412 can slide out of the third recess C3. The second elastic element 442 also deforms to accumulate an elastic potential energy. At the same time, a recovery force F2, which is perpendicular to the first direction D1, is applied to the second roller set 441, so that the second roller 4412 can be close to the second arc sliding track 411b and slide along the second arc sliding track 411b.

Similarly, when the user continuously applies the force to the second sliding member 421, the second elastic element 442 can release its elastic potential energy to make the second roller 4412 slide along the second arc sliding track 411a automatically after the second roller 4412 passes the top H2 of the second arc sliding track 411a. Thus, the user does not have to apply force continuously, and the second roller 4412 can automatically slide to the fourth recess C4. After that, the first sliding member 411 can be moved to an opening position and then fixed.

Since the actions of the second arc sliding track 411b and the second roller assembly 44 are the same as that of the first arc sliding track 411a and the first roller assembly 43, the detailed descriptions thereof will be omitted.

According to the arc sliding tracks 411a and 411b and the roller assemblies 43 and 44, which are equally disposed at two sides of the housing, the first sliding member 411 and the second sliding member 421 can be forced averagely during the relative movement. Thus, the structural reliability of the electronic device 4 can be improved.

### FOURTH EMBODIMENT

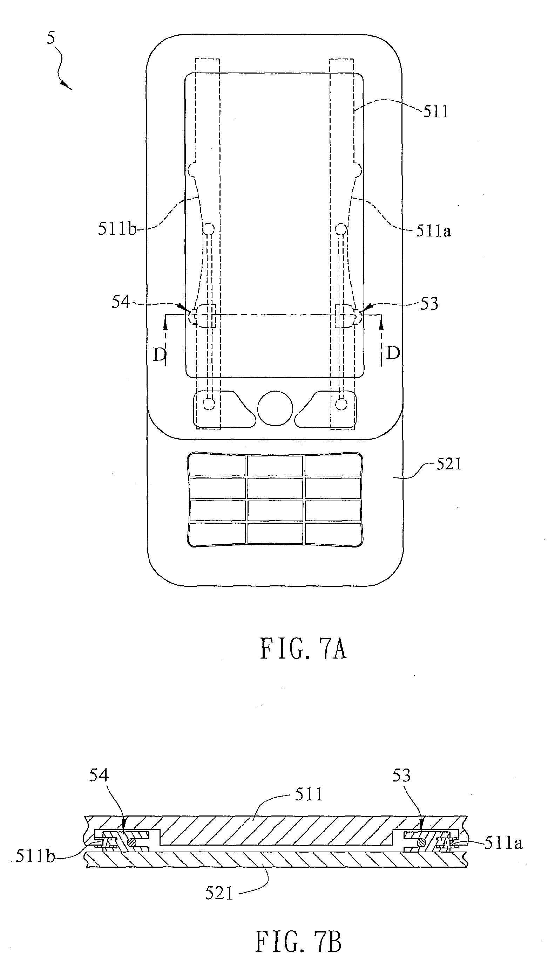

Please refer to FIGS. 7A and 7B. FIG. 7A is a top view of an electronic device 5. FIG. 7B is an enlarged sectional view of the first sliding member 511 and the second sliding member 521 along the line DD of FIG. 7A.

The difference between the electronic device 5 and the electronic device 3 of the second embodiment is in that the first arc sliding track 511a is disposed at one side of the first sliding member 511, the second arc sliding track 511b is disposed at the other side of the first sliding member 511, and the first roller assembly 53 and the second roller assembly 54 are disposed between the first arc sliding track 511a and the second arc sliding track 511b.

Since the structures and actions of the first arc sliding track 511a, the second arc sliding track 511b, the first roller assembly 53 and the second roller assembly 54 are the same as those described in the second embodiment, the detailed descriptions thereof will be omitted.

In the embodiment, the roller assemblies 53 and 54 are disposed between the arc sliding tracks 511a and 511b, and the functions thereof are the same as those described in the second embodiment. Thus, the structural reliability of the electronic device 5 can be improved.

With reference to FIG. 4B again, the invention also discloses a sliding cover structure, which includes a first sliding member 211, a second sliding member 221 and a roller assembly 23. The first sliding member 211 has a first arc sliding track 211a. The second sliding member 221 is disposed opposite to the first sliding member 211. The first roller assembly 23 includes a first roller set 231 and a first elastic element 232. The first elastic element 232 is disposed adjacent to the first arc sliding track 211a, and the extension direction of the first elastic element 232 is the track direction of the first arc sliding track 211a. The first roller set 231 is fixed to the first elastic element 232 and slides along the first arc sliding track 211a. When the first sliding member 211 is moved toward the first direction D1, the first roller set 231 slides along the first arc sliding track 211a. At the same time, the first elastic element 232 applies a recovery force F1, which is perpendicular to the first direction D1, to the first roller set 231. Since the sliding cover structure has been described in the first embodiment, the detailed description thereof will be omitted.
To sum up, the electronic device and sliding cover structure thereof of the invention utilize the cooperation of the arc sliding track of the first sliding member and the roller set of the second sliding member, so that the roller set can slide on the arc sliding track so as to generate the relative movement of the first and second sliding members. Thus, when the user does not need to use the bottom area of the second sliding member, the bottom area can be covered and protected by the first sliding member. When the user wants to use the bottom area, the first and second sliding members can relatively move to expose the bottom area. Thus, the user can operate the bottom area. In addition, since the first arc sliding track has an arc shape, the semi-automatic sliding function can be performed according to the relative movement of the first and second sliding members. This can increase the convenience of the user. Furthermore, the connection interface of the first and second sliding members can be efficiently minimized by the combination usage of the arc sliding track and the roller set, thereby decreasing the thickness of the electronic device.
In summary there is disclosed a sliding cover structure including a first sliding member having a first arc sliding track, a second sliding member disposed opposite to the first sliding member and a first roller assembly having a first elastic element and a first roller set. At least one end of the first elastic element is fixed to the second sliding member. The first roller set is fixed to the first elastic element and slides along the first arc sliding track. When the first sliding member is forced to slide relatively to the second sliding member, the first roller set slides along the first arc sliding track and the first elastic element deforms to accumulate an elastic potential energy. After the first roller set passes the top of the first arc sliding track, the elastic potential energy is released to make the first sliding member slide along the first arc sliding track automatically.

Although the invention has been described with reference to specific embodiments, this description is not meant to be construed in a limiting sense. Various modifications of the disclosed embodiments, as well as alternative embodiments, will be apparent to persons skilled in the art. It is, therefore, contemplated that the appended claims will cover all modifications that fall within the true scope of the invention.

## Claims

1. A sliding cover structure, comprising:
a first sliding member (211) having a first arc sliding track (211a);
a second sliding member (221) disposed opposite to the first sliding member; and
a first roller assembly (23) comprising a first elastic element (232) and a first roller set (231), wherein at least one end of the first elastic element is fixed to the second sliding member, and the first roller set is fixed to the first elastic element and slides along the first arc sliding track;
when the first sliding member (211) is forced to slide relatively to the second sliding member (221), the first roller set slides along the first arc sliding track and
the first elastic element deforms to accumulate an elastic potential energy, and after the first roller set passes the top of the first arc sliding track, the elastic potential energy is released to make the first sliding member slide along the first arc sliding track automatically.

2. The sliding cover structure according to claim 1, wherein the first arc sliding track (211a) has a first recess and a second recess, and the first roller set (231) slides from the first recess to the second recess along the first arc sliding track.

3. The sliding cover structure according to claim 1, wherein the first elastic element (232) is a spring or a wire spring.

4. The sliding cover structure according to claim 1, wherein the first roller set (231) has a first fixing portion fixed to the first elastic element and a first roller slidingly disposed on the first arc sliding track.

5. The sliding cover structure according to claim 4, wherein the first arc sliding track (211a) is a circular arc, and a center of the circular arc and a center of the first roller set are disposed at different sides of the first arc sliding track.

6. The sliding cover structure according to claim 2, wherein the first sliding member (211; 411) further has a second arc sliding track (211b; 411b), the first arc sliding track is disposed at one side of the first sliding member, and the second arc sliding track is disposed at the other side of the first sliding member.

7. The sliding cover structure according to claim 6, further comprising:
a second roller assembly (44) comprising a second elastic element (442) and a second roller set (441), wherein at least one end of the second elastic element is fixed to the second sliding member, and the second roller set is fixed to the second elastic element and slides along the second arc sliding track.

8. The sliding cover structure according to claim 6, wherein the second arc sliding track (411b) has a third recess and a fourth recess disposed corresponding to the first recess and the second recess, respectively.

9. The sliding cover structure according to claim 7, wherein the first arc sliding track (411a) and the second arc sliding track (411b) are disposed between the first roller set and the second roller set.

10. The sliding cover structure according to claim 7, wherein the first roller set (431) and the second roller set (441) are disposed between the first arc sliding track and the second arc sliding track.

11. The sliding cover structure according to claim 7, wherein the second elastic element (442) is a spring or a wire spring.

12. The sliding cover structure according to claim 7, wherein the second roller set (441) has a second fixing portion fixed to the second elastic element and a second roller slidingly disposed on the second arc sliding track.

13. An electronic device (2) , comprising:
a first housing (21) comprising a first sliding member, wherein the first sliding member has a first arc sliding track;
a second housing (22) slidingly connected to the first housing, wherein the second housing comprises a second sliding member; and
a first roller assembly (23) comprising a first elastic element and a first roller set, wherein at least one end of the first elastic element is fixed to the second sliding member, and the first roller set is fixed to the first elastic element and slides along the first arc sliding track;
when the first housing is forced so the first sliding member is slid relatively to the second sliding member, the first roller set slides along the first arc sliding track and the first elastic element deforms to accumulate an elastic potential energy, and after the first roller set passes the top of the first arc sliding track, the elastic potential energy is released to make the first sliding member slide along the first arc sliding track automatically.

14. The electronic device according to claim 13, wherein the first arc sliding track has a first recess and a second recess, and the first roller set slides from the first recess to the second recess along the first arc sliding track.

15. The electronic device according to claim 13, wherein the first elastic element is a spring or a wire spring.

16. The electronic device according to claim 13, wherein the first roller set has a first fixing portion fixed to the first elastic element and a first roller slidingly disposed on the first arc sliding track.

17. The electronic device according to claim 16, wherein the first arc sliding track is a circular arc, and a center of the circular arc and a center of the first roller set are disposed at different sides of the first arc sliding track.

18. The electronic device according to claim 14, wherein the first sliding member further has a second arc sliding track, the first arc sliding track is disposed at one side of the first sliding member, and the second arc sliding track is disposed at the other side of the first sliding member.

19. The electronic device according to claim 18, further comprising:
a second roller assembly comprising a second elastic element and a second roller set, wherein at least one end of the second elastic element is fixed to the second sliding member, and the second roller set is fixed to the second elastic element and slides along the second arc sliding track.

20. The electronic device according to claim 18, wherein the second arc sliding track has a third recess and a fourth recess disposed corresponding to the first recess and the second recess, respectively.

21. The electronic device according to claim 19, wherein the first arc sliding track and the second arc sliding track are disposed between the first roller set and the second roller set.

22. The electronic device according to claim 19, wherein the first roller set and the second roller set are disposed between the first arc sliding track and the second arc sliding track.

23. The electronic device according to claim 19, wherein the second elastic element is a spring or a wire spring.

24. The electronic device according to claim 19, wherein the second roller set has a second fixing portion fixed to the second elastic element and a second roller slidingly disposed on the second arc sliding track.

25. The electronic device according to claim 13, wherein the first housing has an opening, and a display panel is disposed in the opening.

26. The electronic device according to claim 13, wherein the second sliding member has a bottom area, and after the first sliding member slides relatively to the second sliding member, the bottom area is exposed.
